# EUROPEAN PATENT APPLICATION

(11) **EP 2 945 207 A1**
(43) Date of publication of application: **18.11.2015**
(21) Application number: 14168230.2
(22) Date of filing: 14.05.2014
(51) Int. Cl.: H01M 4/02, H01M 4/86, H01M 8/12

(54) **MAX phase materials for use in solid oxide fuel cells and solid oxide electrolysis cells**

(71) Applicant: Haldor Topsøe A/S, 2800 Kgs. Lyngby (DK)
(72) Inventor: CHRISTIANSEN, Niels, 2820 Gentofte (DK); KÜNGAS, Rainer, 2300 Copenhagen (DK); BLENNOW TULLMAR, Bengt Peter Gustav, 2800 Kgs. Lyngby (DK)
(74) Representative: Haldor Topsøe A/S

(57) **Abstract**

A solid oxide fuel cell (SOFC) or solid oxide electrolysis cell (SOEC) component incorporates or consists of a MAX phase material with the general formula Mₙ₊₁AX_{n'} wherein M is an early transition metal, n is an integer or a real number, A is an A-group element (specifically the subset of elements 13-16) and X is carbon and/or nitrogen and/or oxygen (such as M₂AX, M₃AX₂ or M₄AX₃), or more complex stacking sequences thereof (such as M₅AX₄, M₆AX₅ etc.). The materials are useful as coatings on stack components and interlayers in cells and stacks due to their excellent corrosion stability, thermal expansion match and high electronic conductivity.

## Description

The present invention relates to new materials for use in a solid oxide fuel cell (SOFC) or a solid oxide electrolysis cell (SOEC). More specifically, the invention relates to the use of so-called MAX phase materials in SOFC and SOEC components.

At present, SOFCs are based on three different main concepts: (1) electrolyte supported, where the electrolyte component is based on zirconia ceramics; (2) anode supported, where the anode support layer is based on a nickel-zirconia cermet material, and (3) metal supported, where the support layer is based on a porous or perforated metal layer, most often ferritic stainless steel. Of these support layers, (1) and (2) are characterised by stability against corrosion at high temperatures, but on the other hand they are brittle and therefore mechanically unreliable. As regards (3), this type of support layer is characterised by a limited stability against corrosion, but on the other hand it is ductile and deformable, thus being more mechanically reliable.

It would be desirable to have access to materials, which combine the advantages of the above support layers without having their disadvantages.

A state of the art solid oxide fuel cell consists of at least three layers: A first layer, which is the porous anode, a second layer, which is the dense solid oxide electrolyte, and a third layer, which is the porous cathode. Each layer serves a specific function, so that the integral cell both has sufficient structural strength, a sufficient electron conductivity in the outer layers, a sufficient permeability for oxygen ions and a sufficient electrical isolation in the electrolyte. In addition to this the cell must have a sufficient anode-relevant catalytic activity on the anode side and a sufficient cathode-relevant catalytic activity on the other. Furthermore, both the anode and cathode layers must provide a suitable permeability for gases, whereas the electrolyte must be gas tight. Also some other properties are needed, such as a good manufacturability, and the thermal expansions of all the layers must be matched to allow the heating of the fuel cell stack to its operational temperature and a subsequent cooling of the stack without failure.

The state of the art does provide a number of materials for these functions, but these materials are not perfect, and some limitations apply.

It is known in the art that the electrolyte can be an yttria-stabilized zirconia (YSZ). This material per se is stable in reducing and oxidizing environments, but its inferior ductility makes it susceptible to failure if other cell components force it to elongate beyond its limits.

It is also known in the art that the anode support can be a porous cermet mixture of nickel metal and a zirconia ceramic. This material has good electron and ion conducting properties and a good mechanical strength, but it cannot withstand multiple reduction and oxidation processes. Once in the reduced state, it has to stay reduced, otherwise it will expand, disintegrate and further force the neighbouring electrolyte to fracture. It is therefore desirable to identify an anode/anode support material which is redox stable.

The present invention relates to the introduction of MAX-phases as well-suited materials for the solid oxide fuel cell and electrolysis cell components with improved corrosion resistance, redox stability and mechanical and struc-tural stability.

There are more than 60 ternary carbides and nitrides in the MAX phase family. These ternary nitrides and carbides have a nano-laminate structure. They have a high temperature stability, and they are stiff, thermal shock resistant and damage tolerant (crack propagation is limited). Moreover they are very good electrical conductors (in fact better than most steels), good contactors and good heat conductors, and they are machinable and formable by shaping techniques such as cold-pressing, slip casting, cold isostatic pressing and injection moulding. They can be sintered to full density or to a tailored porosity.

The term "MAX phase" was introduced in the late 1990s and applies to the above-mentioned family of ternary carbides and nitrides sharing a layered structure. The MAX phase compounds are called so because of their chemical formula Mₙ₊₁AXₙ, where M is an early transition metal, n = 1, 2 or 3, A is an A-group element (specifically the subset of elements 13-16), and X is carbon and/or nitrogen and/or oxygen. Thus, the formula for the MAX phase materials can be M₂AX (also called 211 phases), M₃AX₂ (also called 312 phas-es) or M₄AX₃ (also called 413 phases).

A report on the synthesis of phase-pure bulk Ti₃SiC₂ samples (M.W. Barsoum & T. El-Raghy, "Synthesis and characterization of a remarkable ceramic: Ti3SiC2", J.Am.Ceram.Soc. 79, 1953-1956 (1996)) revealed that these samples had a quite unusual combination of properties, and since then, research on MAX phases has increased dramatically.

The MAX phases are layered hexagonal crystal structures with two formula units per unit cell for structures with n equal to 1-3. The unit cells consist of M₆X-octahedra with the X-atoms filling the octahedral sites between the M-atoms. The octahedra alternate with layers of pure A-elements located at the centers of trigonal prisms that are slightly larger, and thus more accommodating of the larger A-atoms. When n = 1, the A-layers are separated by two M-layers (M₂AX); when n = 2, they are separated by three M-layers (M₃AX₂), and when n = 3, they are separated by four M-layers (M₄AX₃). MAX phases with more complex stacking sequences, such as M₅AX₄, M₆AX₅ and M₇AX₆, have also been reported (N.J. Lane, M. Naguib, J. Lu, L. Hultman & M.W. Barsoum, "Structure of a new bulk Ti5Al2C3 MAX phase produced by the topotactic transformation of Ti2AlC", J.Eur.Ceram. Soc. 32(9), 3485-3491 (2012)).

In addition to the "pure" MAX phases that contain one of each of the M, A and X elements, the number of possible solid solutions is quite large. Solid solutions have been processed and characterized with substitution on
- M sites, e.g. (Nb,Zr)₂AlC, (Ti,V)₂AlC, (Ti,Nb)₂AlC, (Ti,Cr)₂AlC, (Ti,Hf)₂InC and (Ti,V)₂SC;
- A sites, e.g. Ti₃(Si,Ge)C₂ and Ti₃(Sn,Al)C₂ and
- X sites, e.g. Ti₂Al(C,N) and Ti₃Al(C,N)₂.

The growing interest in the MAX phases is due to their unusual, often unique, properties. Like their corresponding binary carbides and nitrides (MX), the MAX phases are elastically stiff, good thermal and electrical conductors, resistant to chemical attack and having relatively low thermal expansion coefficients (TECs). Mechanically, however, the MAX phases are very different from the MX compounds. They are relatively soft, and most of them are readily machinable, thermal shock resistant and damage tolerant. Moreover, some of them are fatigue, creep and oxidation resistant. At room temperature, they can be compressed to stresses as high as 1 GPa and fully recover on removal of the load, while dissipating approximately 25 percent of the mechanical energy. At higher temperatures, they undergo a brittle-to-plastic transition (BPT), above which they are quite plastic, even in tension.

MAX phase materials for various purposes have been described and characterized in a number of publications. The literature describes investigations of several different MAX phase compositions. For instance, Z.M. Sun (International Materials Reviews, vol 56, no 3, 143-166 (2011)) has listed an overview of MAX phases reported in the literature as having been experimentally synthesized, proposed and/or theoretically predicted. Further, C. Hu, H. Zhang, F. Li, Q. Huang and Y. Bao (Int. Journal of Refractory Metals and Hard Materials, 36, 300-312 (2013)) have published a review of new phases in the MAX family. Even though some of these materials exhibit low measured electrical resistivity when measured at room temperature after synthesis, none of the examples have been tailored for low contact resistivity when exposed to long term oxidation at higher temperatures.

In the patent field, WO 2006/057618 A2 discloses a coated product consisting of a metallic substrate and a composite coating in which at least one component is of the MAX phase material type. This document also discloses a method of producing such a coated product by vapour deposition techniques in a continuous roll-to-roll process. The coated products include electric contact materials, wear-resistant contacts, low friction surfaces, implants, decorative surfaces or non-sticking surfaces.

US 2008/0081172 A1 describes an abradable seal, especially for use in gas turbine engines, said seal being positioned proximate a rotating element. It includes a substrate having a surface facing the rotating element and a coating positioned on the surface of the substrate. This coating contains a matrix material and a filler material, where the matrix material is a MAX phase material, most preferably Ti₃SiC₂.

Various metal matrix composites based on MAX phase materials are described in US 2010/0055492 A1. In addition to these composites there is also described a process for providing a porous green body comprising a particulate MAX phase material and infiltrating the pores of said green body with a low melting point metal, thereby obtaining a composite material.

US 2010/0090879 A1 relates to a microwave absorber, especially for high temperature applications, which comprises at least one resistive sheet and at least one dielectric layer. What is especially characteristic for this microwave absorber is that the resistive sheet is made of a MAX phase material. It is preferably a MAX phase material from the so-called 312 group, which means that, referring to the above formula Mₙ₊₁AXₙ, it contains three M atoms, one A atom and two X atoms, and n=2. The three known compounds of this group are Ti₃GeC₂, Ti₃AlC₂ and Ti₃SiC₂.

US 2012/0012403 A1 describes a cutting tool comprising a support substrate and a complex ceramic cutting surface laminate formed on the support substrate. This laminate comprises hard shards and a MAX phase material. The cutting tool is particularly useful as drill bits for drilling through geological formations.

US 2013/0052438 A1 concerns an extremely hard and strong oriented ceramic containing a MAX phase material, said oriented ceramic having a layered microstructure similar to shell layers of pearl. It is possible to obtain a layered material having a bending strength of greater than 1 GPa and a fracture toughness of 20 MPa/m². Preferred MAX phase materials for this oriented ceramic are Nb₄AlC₃ and Ti₃SiC₂.

The use of MAX phase materials for fuel cell purposes is, however, only known from one publication, more specifically CN 102117907A concerning a material for a solid oxide fuel cell (SOFC) interconnect. Said material is a titanium silicon carbide or a modified titanium silicon carbide, more specifically a ternary layered Ti₃SiC₂ ceramic. The titanium silicon carbide can be modified by solid solution modification, in which an Al solid solution is formed at the Si position, or an Nb solid solution is formed at the Ti position while an Al solid solution is formed at the Si position. Said material has an oxidation resistance and an electrical conductivity in working environment equivalent to those of an alloy interconnect material. The thermal expansion coefficient (TEC) is close to that of the yttriastabilized zirconia (YSZ) electrolyte, the processability is good, and the thermal stability and the creep resistance are high.

These properties make the MAX phase materials very interesting candidates for various solid oxide cell applications.

Thus, the present invention envisages the use of MAX phases as materials for SOC components, an SOC (solid oxide cell) being either a solid oxide fuel cell (SOFC) or a solid oxide electrolysis cell (SOEC). They may also be used as interconnects and coatings of SOC stack and systems components.

More specifically, the invention relates to a solid oxide fuel cell (SOFC) or solid oxide electrolysis cell (SOEC) component incorporating or consisting of a MAX phase material with the general formula Mₙ₊₁AXₙ, where M is an early transition metal, n is an integer or a real number, A is an A-group element (specifically the subset of elements 13-16), and X is carbon and/or nitrogen and/or oxygen (such as M₂AX, M₃AX₂ or M₄AX₃), or more complex stacking sequences thereof (such as M₅AX₄, M₆AX₅ etc.). The component can be selected from an interconnect, an anode and/or a cathode, an anode support or an anode backbone structure.

Thus, the invention relates to a solid oxide cell component prepared by a method comprising the steps of:
(a) providing a porous phase with the above-mentioned general formula Mₙ₊₁AXₙ,
(b) combining the structure obtained in step (a) with at least one electronically conducting phase, and
(c) combining the structure obtained in step (b) with a ceramic, ionically conducting phase.

Another aspect of the invention is a solid oxide cell component prepared by a method comprising the steps of:
(a) providing a porous phase with the above-mentioned general formula Mₙ₊₁AXₙ,
(b) forming an electrolyte on the structure obtained in step (a),
(c) combining the structure obtained in step (b) with at least one electronically conducting phase in the porous part of the structure, and
(d) combining the structure obtained in step (c) with a ceramic, ionically conducting phase in the porous part of the structure.

In this cell component, another layer is preferably placed on top of the electrolyte, said layer consisting of:
an electronically conductive phase or
an ion conducting phase or
a mixed conducting phase or
a mixed conducting phase in combination with an electronically conductive phase or
an ion conducting phase in combination with an electronically conductive phase or an Mₙ₊₁AXₙ material in combination with any of the above phases.

In the above components, the ceramic, ionically conducting phase is preferably dispersed at least partially within the pores of the porous Mₙ₊₁AXₙ material. It is also preferred that the electronically conducting phase is dispersed at least partially within the pores of the porous Mₙ₊₁AXₙ material and that the electronically conducting phase is also ionically conducting.

Moreover it is preferred that the above step (a) further comprises providing an additional layer, said layer consisting of:
an electronically conductive phase or
an ion conducting phase or
a mixed conducting phase or
a mixed conducting phase in combination with an electronically conductive phase or
an ion conducting phase in combination with an electronically conductive phase.

In the electrodes according to the invention the structure preferably has a graded porosity.

According to the present invention the process for manufacturing cells and stacks may consist of the following steps (a) to (e), which only constitute an exemplification. In fact, various techniques may be used for manufacturing cells and stacks, and it is understood that the scope of the invention is not to be limited except as otherwise set forth in the claims.
(a) A fuel cell interconnect is made by powder pressing, extrusion, roller compaction, tape casting, printing, air spraying or thermal spraying of an interconnect material, which material can be any material suited for SOFC use without coating, but preferably is a material containing - or consisting solely of - a MAX phase material. The shaped interconnects may be used in the stack assemblage either non-sintered or after densification by sintering.
(b) A cell consisting of a electrolyte layer, an anode backbone layer and a cathode backbone layer, where at least one of these backbone layers contains a MAX phase material, is made by one of the processes mentioned in (a). Shaping of the cells may be followed by a sintering step leaving a certain open porosity of the electrode backbone structures. Active electrode material may be infiltrated into the sintered open backbone porosity. The shaped cells may be assembled with other stack components in the stack assemblage non-sintered or after sintering.
(c) The cells and interconnects are stacked, and the stack is subjected to a certain compression, so that all layers get in mutually intimate contact.
(d) The entire stack is sintered under a controlled compression and in a controlled atmosphere, and
(e) the stack is proceeded to a cathode and anode impregnation step.

Because of their versatile properties, the MAX phase materials can also be used for preparing a support layer for a solid oxide fuel cell.

During synthesis and processing of the MAX phase material, N and/or C may be partly substituted by oxygen developing a mixed oxide nitride, oxide carbide or oxide nitride carbide MAX phase.

MAX phase materials may be used as coatings on stack components and interlayers in cells and stacks due to their excellent corrosion stability, thermal expansion match and high electronic conductivity. MAX phase materials may, due to their large compositional flexibility and chemical stability, be tailored to function as diffusion barrier layers between cell components and stack components. Such layers may be formed by processing techniques, such as physical vapour deposition (PVD), chemical vapour deposition (CVD), atomic layer deposition (ALD), pulsed laser deposition (PLD), thermal spraying and air spraying or wet deposition followed by sintering.

## Claims

1. A solid oxide fuel cell (SOFC) or solid oxide electrolysis cell (SOEC) component incorporating or consisting of a MAX phase material with the general formula
Mₙ₊₁AXₙ
where M is an early transition metal, n is an integer or a real number, A is an A-group element (specifically the subset of elements 13-16), and X is carbon and/or nitrogen and/or oxygen (such as M₂AX, M₃AX₂ or M₄AX₃), or more complex stacking sequences thereof (such as M₅AX₄, M₆AX₅ etc.).

2. Cell component according to claim 1, said component having a porosity and being selected from an anode and/or a cathode and/or an anode backbone layer and/or a cathode backbone layer and/or a support layer.

3. Cell component according to claim 1 or 2, said component having a porosity and being a composite comprising a MAX phase material with the general formula Mₙ₊₁AXₙ and at least one secondary material.

4. Cell component according to claim 3, wherein the secondary material is electronically conducting, ionically conducting or both.

5. A solid oxide cell component according to any of the claims 1-4 combined with a substantially gas-tight and ionically conducting electrolyte layer.

6. A cell component according to any of the claims 3-5, wherein the ceramic, ionically conducting phase is dispersed at least partially within the pores of the porous Mₙ₊₁AXₙ material.

7. A cell component according to any of the claims 3-5, wherein the electronically conducting phase is dispersed at least partially within the pores of the porous Mₙ₊₁AXₙ material.

8. A cell component according to any of the claims 3-7, wherein the electronically conducting phase is also ionically conducting.

9. A component according to claim 3, wherein the porous Mₙ₊₁AXₙ material is combined with an additional layer, said layer consisting of:
an electronically conductive phase or
an ion conducting phase or
a mixed conducting phase or
a mixed conducting phase in combination with an electronically conductive phase or
an ion conducting phase in combination with an electronically conductive phase.

10. An electrode according to claim 3, wherein the porous Mₙ₊₁AXₙ structure has a graded porosity.

11. An electrode according to claim 5, wherein another layer is placed on top of the electrolyte, said layer consisting of:
an electronically conductive phase or
an ion conducting phase or
a mixed conducting phase or
a mixed conducting phase in combination with an electronically conductive phase or
an ion conducting phase in combination with an electronically conductive phase or
an Mₙ₊₁AXₙ material in combination with any of the above phases.

12. An electrode according to any of the claims 1-11, wherein another layer is placed next to the porous layer containing Mₙ₊₁AXₙ material, said layer being dense or porous and containing Mₙ₊₁AXₙ material.

13. A stack of cells comprising components according to any of the preceding claims, wherein the cells are electrically connected in series configuration.
